(19) Europäisches Patentamt

European Patent Office

Office européen des brevets

(11) Veröffentlichungsnummer: **0 325 906**
**A1**

# (12) EUROPÄISCHE PATENTANMELDUNG

(21) Anmeldenummer: 89100002.8

(22) Anmeldetag: 02.01.89

(51) Int. Cl.⁴: **B01J 20/18 , B01D 53/02**

(30) Priorität: **09.01.88 DE 3800388**

(43) Veröffentlichungstag der Anmeldung:
**02.08.89 Patentblatt 89/31**

(84) Benannte Vertragsstaaten:
**AT BE DE ES FR GB IT NL SE**

(71) Anmelder: **BAYER AG**

**D-5090 Leverkusen 1 Bayerwerk(DE)**

(72) Erfinder: **Puppe, Lothar, Dr.**
**Beethovenstrasse 11**
**D-5090 Leverkusen 1(DE)**
Erfinder: **Reiss, Gerhard**
**Ottweilerstrasse 20**
**D-5090 Leverkusen(DE)**

(54) SiO2-gebundenes Zeolith X-Granulat und dessen Verwendung für die Sauerstoffanreicherung.

㉗ Die vorliegende Erfindung betrifft $SiO_2$-gebundenes Zeolith X-Granulat, bei dem der Zeolithanteil Ca-Ionen in einer Menge, die etwa einem Verhältnis 0,4 bis 1,0 Mol $CaO$/Mol $Al_2O_3$ entspricht, enthält.

**EP 0 325 906 A1**

## SiO₂-gebundenes Zeolith X-Granulat und dessen Verwendung für die Sauerstoffanreicherung

Gegenstand der vorliegenden Erfindung ist ein SiO₂-gebundener Ca-haltiger Zeolith X für die Anreicherung von Sauerstoff aus Luft.

Der spezifische Energiebedarf zur Sauerstofferzeugung durch Tieftemperatur-Luftzerlegung nimmt bei kleinen Kapazitäten stark zu. Sauerstoff kann in kleineren Mengen vorteilhaft durch adsorptive Luftzerlegungsverfahren gewonnen werden. Die erzielbaren Reinheiten sind in der Regel geringer als die des aus der Tieftemperatur-Zerlegung stammenden Sauerstoffs. Die adsorptiven Verfahren arbeiten bei Umgebungstemperatur, die Anlagen sind häufig transportable und zeichnen sich durch kurze Anfahrzeiten und geringen Bedinungsaufwand aus.

In Prozessen zur asorptiven Trennung von Luft in eine sauerstoff- und eine stickstoffreiche Phase wird die höhere Adsorptions-Affinität des Stickstoffs am Adsorbens gegenüber dem Sauerstoff ausgenutzt. Die N₂/O₂-Adsorptionsisothermen zeigen, daß z. B. Ca-Zeolith A mit 5 Å Porenweite mehr Stickstoff als Sauerstoff adsorbiert, der Unterschied zwischen Stickstoff und Sauerstoff ist jedoch nicht so groß, daß eine einwandfreie Trennung von Stickstoff und Sauerstoff der Luft möglich erscheint.

Die Wirksamkeit der adsorptiven Lufttrennung kann beachtlich erhöht werden, wenn man ein spezielles Adsorptionsverfahren - die Druckwechsel-Adsorption (DWA) - anwendet. Verfahren mit Druckwechseladsorption werden immer dann eingesetzt, wenn die zu entfernende Komponente des Rohproduktgases in höherer Konzentration, z.B. über 1 Vol.-% vorliegt oder am Adsorbens ungenügend adsorbiert wird und dadurch bei einer thermischen Regeneration große Adsorptionseinheiten und hohe Regenerationsgasmengen notwendig werden. Allgemein erfolgt die adsorptive Trennung bei einem höheren Druck als die nach dem Adsorptionsschritt folgende Desorption der adsorbierten Komponenten.

In den meisten Fällen wird die Desorption durch Spülung des Adsorptionsmittels mit einem Teil des Produktgases unterstützt, z.B. bei der Gewinnung von Stickstoff aus Verbrennungsgasen oder Trocknung von Gasen.

Die Sauerstoffanreicherung von Luft nimmt gegenüber anderen DWA-Prozessen eine besondere Stellung ein, da neben dem Stickstoff auch Sauerstoff und Argon der Luft an den hierfür verwendeten Molekularsiebzeolithen adsorbiert werden. Es ist deshalb nicht möglich, nur den Stickstoff zu adsorbieren und den gesamten Sauerstoff der Rohproduktluft zu gewinnen. Da Argon ähnlich schwach wie Sauerstoff adsorbiert wird, erhält man im Falle der Sauerstoffanreicherung von Luft nur Sauerstoffreinheiten von 95 % mit einem 5 %igen Restanteil von Argon und Stickstoff.

Wie bereits vorher erwähnt, werden für N₂/O₂-Trennung nach dem DWA-Verfahren zeolithische Molekularsiebe als Adsorbens eingesetzt. Der Zeolith selbst kann in verschiedenster Weise mit seinen Eigenschaften die Größe und den Energiebedarf von O₂-DWA-Anlagen beeinflussen. Zwei wesentliche Anforderungen sind einerseits eine hohe Stickstoffadsorption mit geringer Sauerstoffadsorption und eine gute Diffusion bei der Adsorption und Desorption.

Um eine hohe Stickstoffadsorption zu erreichen, wird calciumausgetauschter Zeolith X für DWA-Anlagen eingesetzt. Eine besondere Bedeutung kommt hierbei dem Austauschgrad $\alpha$ für CaO/Mol Al₂O₃ im Zeolith X zu. Der Austauschgrad $\alpha$ im Zeolith kann von 0 bis 1.0 Mol CaO/Mol Al₂O₃ reichen. Mit zunehmendem Austauschgrad $\alpha$ für CaO nimmt die N₂-Adsorption im Zeolith zu. Erfindungsgemäß wird ein Verhältnis von 0,4 - 1, bevorzugt 0,6 bis 0,9 Mol CaO/Mol Al₂O₃ angestrebt.

Für den Einsatz in technischen Adsorbern wird der Zeolith üblicherweise in granulierter Form verwendet. Für die Herstellung von Granulaten sind verschiedene Verfahren nach dem Stand der Technik bekannt. Man kann das Ca-ausgetauschte Zeolith X-Pulver, das nach an sich bekannten Verfahren hergestellt wurde (vgl. z.B. DAS 1 038 016) mit tonmineralischen Bindemitteln, wie z.B. Attapulgiten, Bentoniten, Sepiolithen, Kaoliniten, Ballclays, Fireclays, o. ä. in Gewichtsmengen von 10 bis 30 %, bevorzugt 15 - 25 %, vermischen und nach der erforderlichen Flüssigkeitszugabe auf den geeigneten Granuliereinrichtungen wie z.B. Walzengranulatoren, Extrudern, Mischgranulatoren, Ringkollerpressen, Strangpressen o. ä. zu Formkörpern verpressen. Ebenso sind Tellergranulatoren oder Granuliertrommeln einsetzbar.

Weiterhin ist es möglich, andere Bindemittel, wie z.B. Al₂O₃, SiO₂ o. ä. zu verwenden. Die Granulierung zu Kugeln mit SiO₂ als Bindemittel erfolgt vorzugsweise nach der DE-OS 3 401 485.

Man erhält hierbei ein SiO₂-gebundenes Granulat, das eine hohe Makroporosität aufweist, was eine Voraussetzung für den Einsatz des Granulats in den DWA-Prozeß ist.

Neben der Höhe des Austauschgrades $\alpha$ für CaO ist die Art der Aktivierung bzw. die Kristallinität des zeolithischen Materials sowie die Zugänglichkeit der innerkristallinen Adsorptionsstellen von erheblicher Bedeutung für eine gute Sauerstoffanreicherung.

Überraschenderweise wurde gefunden, daß Ca-ausgetauschter Zeolith X, der als Bindemittel SiO₂ enthält, eine besonders hohe Leistung für die Sauerstoff-Anreicherung nach dem DWA-Verfahren aufweist. Als Vergleich zu diesem erfindungsgemäßen Material sind in der Tabelle 1 die relativen Sauerstoffproduktraten pro kg Molekularsieb von verschiedenen für die Sauerstoffanreicherung einsetzbaren Zeolith A-Molekularsiebgranulaten aufgeführt.

Hierbei erweist sich die Überlegenheit des erfindungsgemäßen Granulats dadurch, daß gegenüber mit Tonmineralien gebundenem Zeolith X-Granulat mit gleichem Austauschgrad eine 13 % bessere Sauerstoffproduktrate pro kg Molekularsieb erzielt werden kann.

Tabelle

| Vergleich der $O_2$-Produktraten in Abhängigkeit von Bindemittel | |
|---|---|
| Ca-ausgetauschter Zeolith X, Austauschgrad $\alpha$ = 0,80 | |
| Bindemittel Anteil: 15 % | Relative Sauerstoffproduktrate |
| $SiO_2$ | 113 % |
| Ton | 100 % |

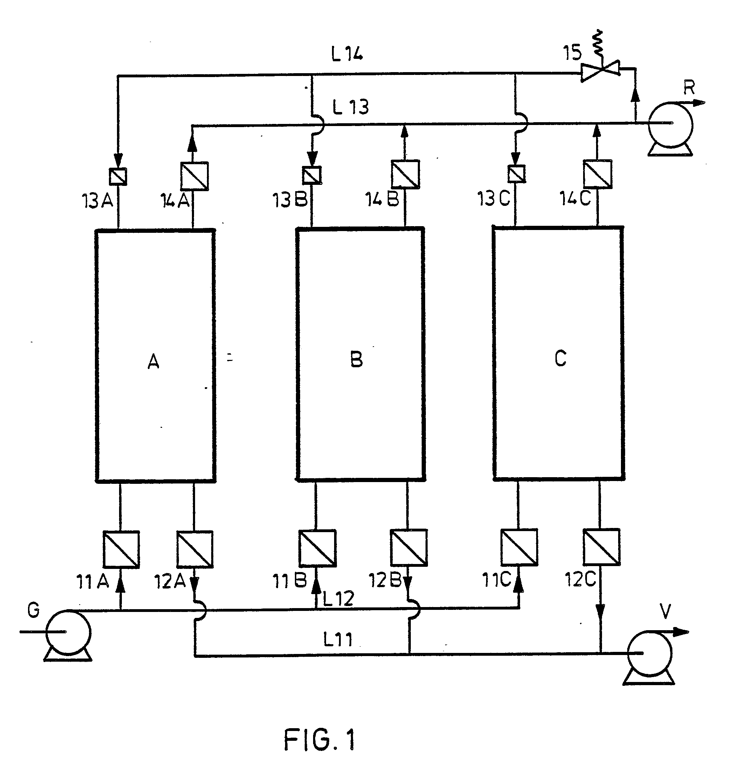

Ein übliches Verfahren zur Erzeugung von mit Sauerstoff angereicherter Luft mit Molekularsieb-Zeolithen ist in Fig. 1 dargestellt (AIChE Symp. 134, Vol. 69, 1973, S. 7).

An der untersten Seite der Adsorber befinden sich Ventile (11) bzw. Klappen für den Rohgaseintritt und Ventile (12) für den Austritt des desorbierten Gases. Das Adsorptionsmittelbett besteht am unteren Ende aus einer Schutzschicht, wie Kieselgel, zur Vortrocknung des eintretenden Rohgases, darüber die Hauptzonen mit Adsorbens zur Trennung des Gasstromes. Am oberen Ende der Adsorber befinden sich Ventile (14) für die Abgabe von adsorptiv behandeltem Gas, über weitere Ventile (13) werden die Adsorber wieder auf Adsorptionsdruck gefüllt. Mit Ventil 15 kann diese Füllung so gesteuert werden, daß ein konstanter Druckanstieg oder eine konstante Füllgasmenge erreicht wird. Das Gebläse (g) der eintretenden Luft überbrückt den Druckverlust der Adsorption.

In den nachfolgenden Beispielen wird die Herstellung der erfinduungsgemäßen Granulate sowie der Einsatz dieser Granulate in einem DWA-Verfahren zur Anreicherung von Sauerstoff aus Luft beschrieben (z.B. DE-OS 3 413 895). Als Vergleich wurde tongebundenes Ca-Zeolith X-Granulat eingesetzt (%-Angaben beziehen sich - soweit nicht anders vermerkt ist - auf Gew.-%).

Beispiele

Beispiel 1 : Herstellung des erfindungsgemäßen Granulats

30 kg Natriumzeolith X mit einem Wassergehalt (Glühverlust) von 25 Gew.-% wurden unter Zugabe von 15 l 30 %igem Kieselsol eines BET-Wertes von ca. 300 m²/g im Intensivmischer zu einem Granulat von ca. 0.1 - 0.8 mm Korngröße verarbeitet. Dieses Vorgranulat gab man in einen Granulierteller.

Dann wurde feinpulvriger Zeolith X fortlaufend dosiert in den rotierenden Teller eingetragen, wobei gleichzeitig 30 %iges Kieselsäuresol an einer anderen Stelle des Tellers auf das sich bewegende Granulat aufgesprüht wurde. Dem Kieselsäuresol wurde über eine Injektionsvorrichtung ein Wasserglasstrom beigemischt, so daß ein Verhältnis von Sol zu Wasserglas von 10 : 1 eingestellt wurde. Es wurde ein kugelförmiges Granulat von 2 bis 3 mm erhalten. Das feuchte Granulat wurde bei 80° C getrocknet, gesiebt, einem Ca-Austausch unterzogen und anschließend auf 400° C erhitzt. Das Material weist eine Sauerstoffanreicherung auf, die 13 % höher ist als das mit Tonmineralien gebundene Zeolith X-Granulat (s. Beispiel 2).

Beispiel 2 (Vergleichsbeispiel):

Die Herstellung des tongebundenen Granulats erfolgte entsprechend dem Stand der Technik (z.B. nach DE-AS 1 040 005). Die Calcinierung wurde bei 650 °C vorgenommen.

Im Vergleich zum Granulat aus Beispiel 1 zeigte dieses Granulat eine niedrigere Sauerstoffanreicherungsrate als das erfindungsgemäße Granulat.

Die Sauerstoffanreicherung an dem erfindungsgemäßen Granulat und dem Vergleichsgranulat wurde entsprechend der DE-OS 3 413 895 durchgeführt.

## Ansprüche

1) $SiO_2$-gebundenes Zeolith X-Granulat, bei dem der Zeolithanteil Ca-Ionen in einer Menge, die etwa einem Verhältnis 0,4 bis 1,0 Mol $CaO$/Mol $Al_2O_3$ entspricht, enthält.

2) Verwendung des Zeolith-Granulats gemäß Anspruch 1 für die Sauerstoffgewinnung nach dem Druckwechselverfahren.

FIG. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 170 026 (BAYER AG) * Seite 2, Zeilen 17-20; Seite 5, Zeilen 21-30; Seite 5, Zeilen 1-16; Seite 8, Zeilen 6-13; Seite 9; Seite 10, Zeilen 11-21; Beispiele 14,15 * --- | 1,2 | B 01 J 20/18 B 01 D 53/02 |
| X | DE-A-3 312 876 (DEGUSSA AG) * Seite 4, Zeilen 4-12; Seite 4, Zeilen 32-34; Seite 8, Zeilen 3-15,25-27; Seite 13, Beispiel 18 * --- | 1 | |
| D,A | DE-A-3 401 485 (BAYER AG) * Ansprüche 1,4; Seite 7, Zeile 25 - Seite 8, Zeile 1; Seite 11, Zeilen 8-13; Seite 14, Beispiel 4 * --- | 1 | |
| A | DE-B-1 165 562 (FARBENFABRIKEN BAYER AG) * Spalte 2, Zeile 40 - Spalte 3, Zeile 7; Beispiele 3,5; Ansprüche 1,4,5 * ----- | 1 | |

**RECHERCHIERTE SACHGEBIETE (Int. Cl.4)**

B 01 D 53/02
B 01 J

Der vorliegende Recherchenbericht wurde für alle Patentansprüche erstellt

| Recherchenort | Abschlußdatum der Recherche | Prüfer |
|---|---|---|
| DEN HAAG | 26-04-1989 | HILGENGA K.J. |